# NEW EUROPEAN PATENT SPECIFICATION

(11) **EP 0 465 095 B2**
(45) Date of publication and mention of the opposition decision: **25.11.1998**
(45) Mention of the grant of the patent: 06.09.1995
(21) Application number: 91305741.0
(22) Date of filing: 25.06.1991
(51) Int. Cl.: B60S 1/38

(54) **Stiffening structure for a windscreen wiper blade**
Versteifung für ein Windschutzscheiben-Wischblatt
Raidisseur pour une lame d'essuie-glace sur un pare-brise

(30) Priority: 26.06.1990 GB 9014177
(43) Date of publication of application: 08.01.1992
(73) Proprietor: TRICO LIMITED, Gwent NP4 0XZ, Wales (GB)
(72) Inventor: Mower, Peter, Twickenham, Middlesex (GB)
(74) Representative: James, Michael John Gwynne

(56) References cited:
- EP-A- 0 260 809
- EP-A- 0 279 640
- EP-A- 0 314 033
- AT-C- 207 269
- DE-A- 1 405 771
- DE-A- 3 208 749
- DE-A- 3 823 001
- DE-B- 1 074 429
- DE-B- 1 247 161
- DE-U- 1 851 115
- DE-U-T0 002 025
- US-A- 4 279 054
- US-A- 4 336 625

## Description

This invention relates to a vertebra for a windscreen wiper blade.

Today, the majority of wind screen wipers have a blade construction comprising a so called "blade rubber" which may be formed from rubber or another elastomeric material and a harness including a main yoke and at least two subsidiary yokes pivotally connected to the ends of the main yoke. These subsidiary yokes carry claws where they are in contact with the blade rubber, the claws engaging in slots or recesses in the blade rubber so as to hold the blade rubber and also to transmit to the blade rubber a force which is generated by a spring device associated with an arm which carries and drives the blade.

In order to cope with the conditions necessary to effect a good wipe of the windscreen, particularly where the windscreen has a variable curvature, it is recessary for the blade rubber to be relatively flexible about a longitudinal plane at right angles to the windscreen to enable the blade to lean over to one side or the other during reciprocating movement of the blade while, at the same time, it must be maintained relatively inflexible transversely parallel to the windscreen so as to maintain the blade rubber in a substantially straight line. Furthermore flexibility must be achieved in a direction towards and away from the windscreen to allow the blade rubber to follow the contour of the screen.

To this end, the bade rubber is usually provided with a stiffener in the form of a vertebra which allows movement to and from the windscreen while preventing flexibility at right angles thereto. One such vertebra is the so called "twin rail" vertebra in which a pair of rails formed of generally planar strip are located in longitudinal grooves on opposite sides of the blade rubber with their minimum dimension at right angles to the windscreen. Such an arrangement is shown in EP-A-0 260 809 in which the vertebra is deformed over a minimal area with a view to retaining the blade harness claw.

With the advent of higher vehicle speeds, the pressure distribution on the blade rubber can become critical for an effective wipe with high airflow velocities and in order to achieve the desired pressure distribution as transmitted to the windscreen, variation in flexibility of the blade rubber perpendicularly to the screen is required. Furthermore, where the curvature of the windscreen is particularly large, certain parts of the blade rubber require different flexibilities to permit the rubber to follow the contour of the windscreen while, at the same time, enabling the wipe characteristics of the blade to be maintained. To this end a number of proposals have been made for achieving this variation in flexibility with varying success. One such proposal is shown in US-A-4 336 625. However, in this case a special construction of vertebra is necessary and cannot therefore be used with twin rail vertebrae.

The present invention seeks to provide for a variation of the flexibility and/or pressure distribution of a windscreen wiper blade rubber along its length in an effective and simple manner.

According to the invention there is provided a vertebra for a blade rubber of a windscreen wiper comprising a pair of rails located longitudinally in side grooves in the blade rubber, each rail being a unitary member, wherein the thickness of each rail measured in a direction at right angles to the intended plane of the windscreen varies longitudinally, at least over part of its width measured in a direction generally parallel to the intended plane of the windscreen, to form one or more localised flattened portions to vary the flexibility of the rail to permit the blade rubber to follow the contour of the windscreen along its length, each flattened portion having been formed by localised rolling, pressing or punching from the normal thickness of the material of the rail which is otherwise of constant, normal thickness.

In one embodiment of the invention, the thickness of the rail is varied across the entire width, the width of the rail at the points of reduced thickness being increased.

In a second embodiment of the invention the thickness of the rail is reduced only along its margins, particularly in small areas along the rail margins.

The reduced thickness of the rails may be provided as individual short lengths at specific points along the blade rubber or may be provided to encompass relatively long lengths of the rail.

In one specific embodiment, the rail may have a normal thickness part extending from one end of the blade rubber to a position beyond the central part thereof, only a region adjacent to the other end being of reduced thickness. In an alternative embodiment, the rail may have both ends of reduced thickness with only the central portion of normal thickness.

The invention will now be described in greater detail, by way of example, with reference to the drawings, in which:-
Figure 1 is a side view of a windscreen wiper blade to which a vertebra in accordance with the invention can be applied;
Figure 2 is a sectional view of the blade rubber, with the harness removed for clarity, showing the cross-section of the vertebra rails taken on the line II - II of figure 1;
Figure 3 is a sectional view of the blade rubber similar to figure 2 but taken on the line III - III of figure 1;
Figure 4 is perspective view of a one form of rail forming one half of a vertebra in accordance with the invention;
Figure 5 is perspective view of a one form of rail forming one half of a vertebra in accordance with the invention;
Figure 6 is a partial side view of the windscreen wiper blade of the type shown in figure 1 showing pressure distribution with a known vertebra construction, and
Figure 7 is a partial side view similar to figure 6 but showing the pressure distribution with a vertebra construction in accordance with the present invention.

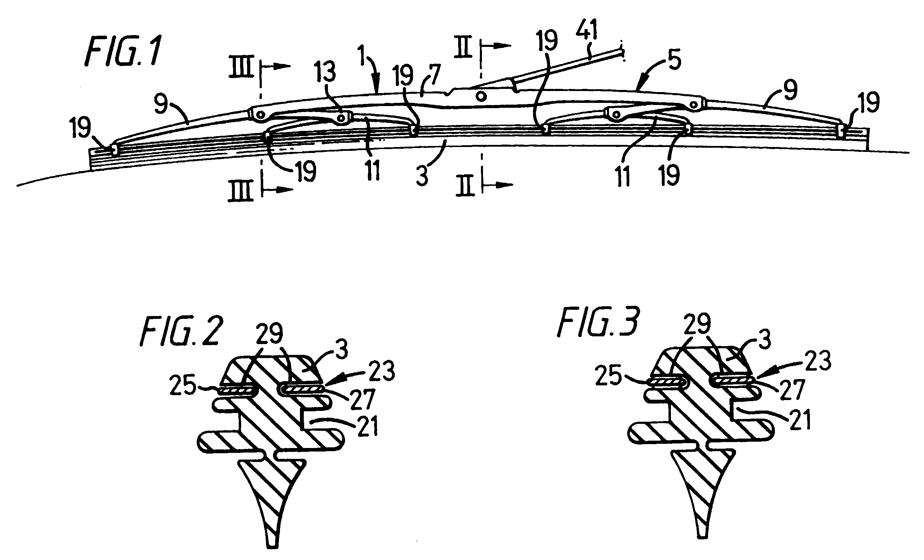

Referring firstly to figures 1 to 3, there is shown a windscreen wiper blade 1 comprising a blade rubber 3 carried by a harness 5. This harness 5 comprises a main yoke 7 carrying a secondary yoke 9 at each end. Each secondary yoke 9 carries a tertiary yoke 11 at its inboard ends 13. Both ends 15 of the tertiary yokes 11 and the outboard ends 17 of the secondary yokes 9 are provided with claws 19 which are arranged to engage slots or recesses 21 in the blade rubber 3 to retain the blade rubber 3 on the harness.

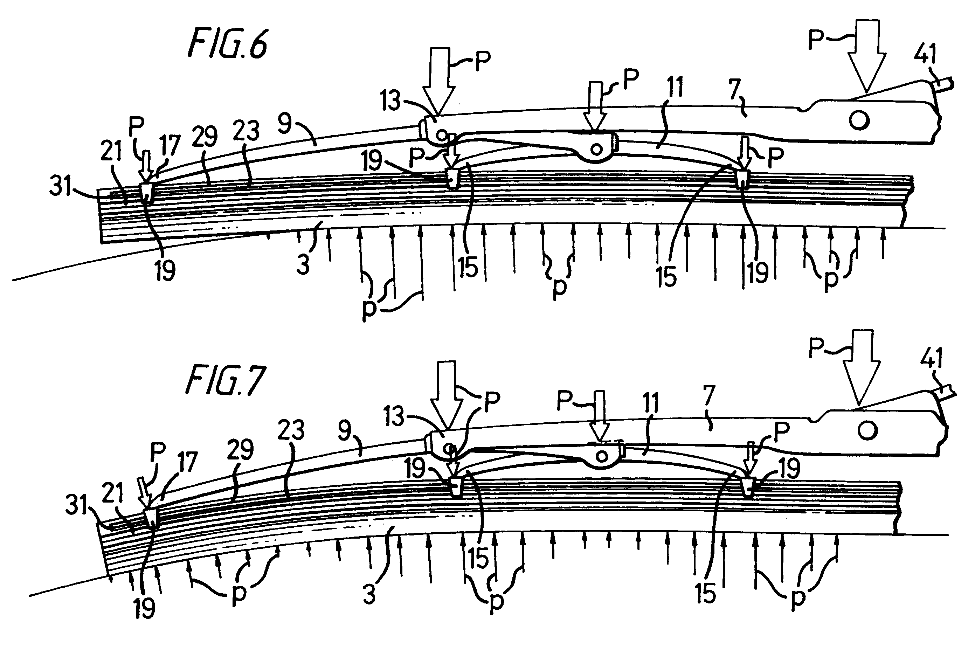

The blade rubber 3 shown has a stiffening structure or vertebra 23 in the form of two rails 25 and 27 which are of substantially the same length as the blade rubber 3 and are located in longitudinally extending slots 29 therein. The rails are retained in the blade rubber 3 by virtue of the slots 29 in which they are positioned being closed at their ends 31 (Figure 6) and by virtue of the fact that they lie between the claws 19 of the yokes 9 and 11. In order to locate the blade rubber 3 in position within the harness 5, the rails 25 and 27 may be provided, towards one end with protruding parts (not shown) carrying slots, the sides of which lie on opposite longitudinal sides of one of the claws 19 in known manner.

Figure 2, as well as being a section on the line II - II of figure 1, shows the cross-section of the previously known rubber and vertebra. It shows that the rails 25 and 27 lying in the slots 29 in the blade rubber 3 had a flat form with a rectangular section whose narrowest side extends at right angles to the windscreen or parallel to the longitudinal central plane of the blade rubber 3. From this, it will appear that, apart from a possible small variation at the claw retention parts (not shown), the flexibility of the blade rubber 3 permitted by the vertebra 23 will be substantially constant throughout its length.

As previously stated, it has been determined that for many applications, particularly in the fields of wind lift at high speeds and variations in the curvature of the windscreen, it is desirable to enable the flexibility of the blade rubber 3 to be variable over its length in order to enable an advantageous pressure distribution to be achieved. In the present case, the flexibility of the vertebra 23 of the blade rubber 3 is varied by a variation in the thickness of the individual rails 25 and 27 at various points along their length.

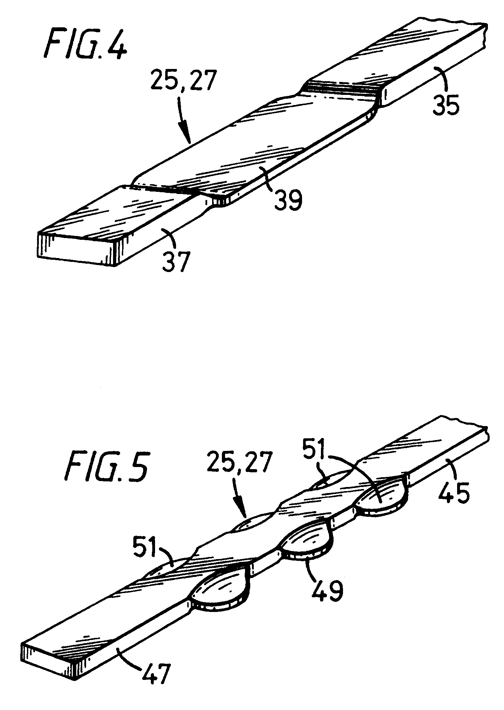

Figure 4 shows a part of a vertebra rail 25 or 27 in perspective view in accordance with a first embodiment of the invention, the two end portions 35 and 37 being of the original thickness and the intermediate portion 39 having a reduced thickness, and also an increased width, whereby an increase in the flexibility of the vertebra rail 25 or 27 is achieved in this area. The change in the thickness can be achieved namely by rolling or pressing. Figure 3 shows a section of the blade rubber 3 and vertebra 23 taken on the line III - III of figure 1, at which section, the reduced thickness of the vertebra rails 25 and 27 is present. As can be seen, both vertebra rails 25 and 27 have a reduced thickness and increased width as compared to the normal thickness and width which can be seen behind the section.

Figure 5 shows a part of a vertebra rail 25 or 27 in perspective view in accordance with a second embodiment of the invention, the two end portions 45 and 47 being of the original thickness and the middle portion 49 having a number of areas 51 having a reduced thickness, and also an increased width, whereby an increase in the flexibility of the vertebra rail 25 or 27 is achieved in this area. The change in the thickness can be achieved namely by a punching operation.

The table provided below shows typical section arrangements for a windscreen wiper blade having double end flexibility and single end flexibility and in which Normal thickness is indicated by ***N*** and reduced thickness by ***R*****:-**

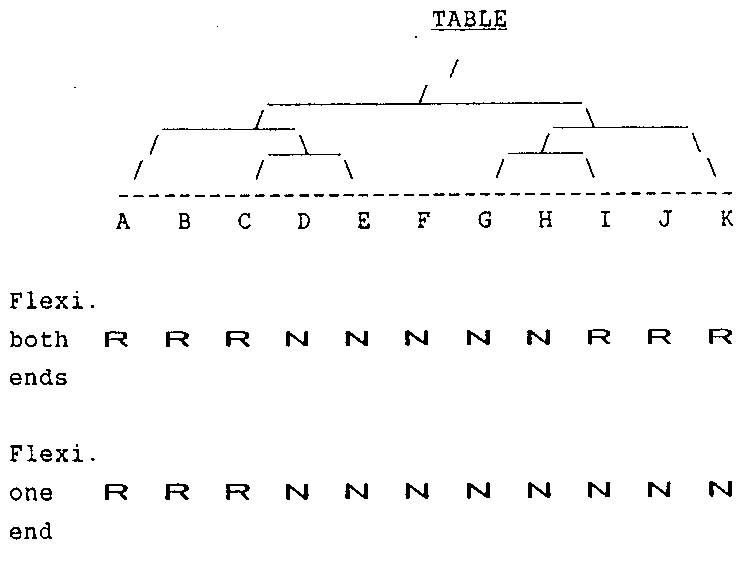

The pressure distribution provided by the usual known vertebra construction on a curved screen is shown in figure 6, while the pressure distribution using a vertebra in accordance with the invention, and as indicated in the above table, is shown in figure 7. In these figures, one half of a windscreen wiper blade is shown, the pressure acting on the windscreen being indicated by the lengths of the shafts of the arrows ***p*** while the pressure applied to the various parts of the wiper blade harness 5 by the wiper arm 41 is shown by the relative sizes of the arrows ***P***. From this it will be seen that, in the known arrangement, the pressure on the windscreen is largest at the points of action of the claws 19 tailing off to a smaller value between the claws 19.

Because of the curvature of the windscreen, the end of the blade rubber shown in figure 6 is not in contact therewith and thus the pressure at this end is reduced to zero. This also causes a slight shift of the pressure peak from beneath the claw 19 of the tertiary yoke 11 towards the end of the blade.

The increased flexibility of the end of the blade in accordance with the present invention and as shown in figure 7 can clearly be seen at the blade end. This flexibility allow the end of the blade to follow the curvature of the windscreen and provides for an evening out of the pressure distribution.

The pressure distribution provided by such an arrangement is shown in Figure 7. In this figure, one half of a windscreen wiper blade is shown, the pressure acting on the windscreen being indicated by the lengths of the shafts of the arrows ***p*** while the pressure applied to the various parts of the wiper blade harness 5 by the wiper arm 41 is shown by the relative sizes of the arrows ***P***. From this it will be seen that the pressure on the windscreen is largest at the points of action of the claws 19 tailing off to a smaller value between the claws 19. As can also be seen, the flexibility of the end portion of the vertebra 23 enables the pressure at the claws 19 at the ends of the blade 1 to become substantially the same as that at the inboard claws 19.

It will be appreciated that various modifications may be made to the above described embodiments without departing from the scope of the invention. For example, while two proposed schemes have been shown for the arrangement of the flexible and non flexible parts of the blade vertebra 23, any other suitable scheme could be used. Thus, the arrangement could be such that the pressure exerted by the blade rubber 3 on the windscreen could be made more constant over the length of the blade.

While in the embodiment of figure 5, the rail has been shown as "edge punched" , a reduction of the thickness of other parts of the rail could be used. Thus the middle part of the rail could be of reduced thickness while the edges or margins of the rail could be maintained at the original thickness. Instead of providing the reduced thickness in such a way that the reduction takes place from both faces of the rail, the reduction could take place from only one face of the rail, leaving the opposite face of the rail flat.

Furthermore, the reduction in thickness could be produced in short lengths, similar to the lengths involved in the embodiment of figure 5 but extending across the entire width of the rail. It will also be noted that with the reduction in thickness there comes an increase in width of the rail. If desired this extra width may be removed by "shaving " the rail down one or both edges.

From the foregoing, it will be seen that the invention can, in its specific embodiments, provide a variation of the flexibility and/or pressure distribution of a windscreen wiper blade rubber along its length in an effective and simple manner.

## Claims

1. A vertebra (23) for a blade rubber (3) of a windscreen wiper comprising a pair of rails (25, 27) located longitudinally in side grooves (29) in the blade rubber (3), each rail being a unitary member, characterised in that the thickness of each rail (25, 27) measured in a direction at right angles to the intended plane of the windscreen varies longitudinally, at least over part of its width measured in a direction generally parallel to the intended plane of the windscreen, to form one or more localised flattened portions to vary the flexibility of the rail to permit the blade rubber (3) to follow the contour of the windscreen along its length, each flattened portion having been formed by localised rolling, pressing or punching from the normal thickness of the material of the rail which is otherwise of constant, normal thickness.

2. A vertebra as claimed in claim 1, characterised in that the thickness of the rail (25, 27) is varied across the entire width, the width of the rail (25, 27) at the points (39) of reduced thickness being increased.

3. A vertebra as claimed in claim 1, characterised in that the thickness of the rail (25, 27) is reduced only along its margins (51).

4. A vertebra as claimed in any preceding claim, characterised in that the thickness of the rails (25, 27) is reduced by flattening parts (39) of the rail.

5. A vertebra as claimed in claim 1, characterised in that the pressure is applied in small areas (51) along the rail margin(s).

6. A vertebra as claimed in any preceding claim, characterised in that the reduced thickness of the rails (25, 27) is provided as individual short lengths at specific points (39, 51) along the blade rubber (3).

7. A vertebra as claimed in any one of claims 1 to 5, characterised in that the reduced thickness of the rail (25, 27) is provided to encompass relatively long lengths of the rail (25, 27).

8. A vertebra as claimed in claim 7, characterised in that the rail (25, 27) has a normal thickness part extending from one end of the blade rubber (3) to a position beyond the central part thereof, only a region adjacent to the other end being of reduced thickness.

9. A vertebra as claimed in any one of claims 1 to 7, characterised in that the rail (25, 27) has both ends of reduced thickness with only the central portion of normal thickness.

## Patentansprüche

1. Federschiene (23) für ein Gummiblatt (3) eines Windschutzscheibenwischers mit einem in Längsrichtung in in dem Gummiblatt (3) vorgesehenen Seitennuten (29) angeordneten Schienenpaar (25, 27), wobei jede Schiene als einheitliches Teil ausgebildet ist, dadurch gekennzeichnet, daß die in einer Richtung rechtwinklig zu der gedachten Ebene der Windschutzscheibe gemessene Dicke jeder Schiene (25, 27) in Längsrichtung, zumindest über einen Teil ihrer in einer im allgemeinen parallelen Richtung zu der gedachten Ebene der Windschutzscheibe gemessenen Breite variiert, um einen oder mehrere lokalisierte abgeflachte Abschnitte zur Variierung der Flexibilität der Schiene zu bilden, um dem Gummiblatt (3) zu erlauben, der Kontur der Windschutzscheibe über seine Länge zu folgen, und daß jeder abgeflachte Abschnitt durch örtliches Walzen, Pressen oder Stanzen von der Normaldicke des Materials der Schiene erstellt ist, welche ansonsten eine konstante, normale Dicke aufweist.

2. Federschiene nach Anspruch 1, dadurch gekennzeichnet, daß die Dicke der Schiene (25, 27) über die gesamte Breite variiert, wobei die Breite der Schiene (25, 27) an den Punkten (39) reduzierter Dicke erhöht ist.

3. Federschiene nach Anspruch 1, dadurch gekennzeichnet, daß die Dicke der Schiene (25, 27) nur entlang ihrer Ränder (51) reduziert ist.

4. Federschiene nach einem der vorstehenden Ansprüche, dadurch gekennzeichnet, daß die Dicke der Schienen (25, 27) durch Abflachen von Teilen (39) der Schiene reduziert ist.

5. Federschiene nach Anspruch 1, dadurch gekennzeichnet, daß der Druck in kleinen Bereichen (51) entlang des Schienenrandes oder der Schienenränder aufgebracht wird.

6. Federschiene nach einem der vorstehenden Ansprüche, dadurch gekennzeichnet, daß die reduzierte Dicke der Schienen (25, 27) als einzelne kurze Längenabschnitte an spezifischen Punkten (39, 51) entlang des Gummiblattes (3) vorgesehen ist.

7. Federschiene nach einem der Ansprüche 1 bis 5, dadurch gekennzeichnet, daß vorgesehen ist, daß die reduzierte Dicke der Schiene (25, 27) relativ lange Längenabschnitte der Schiene (25, 27) umfaßt.

8. Federschiene nach Anspruch 7, dadurch gekennzeichnet, daß die Schiene (25, 27) einen Teil mit normaler Dicke aufweist, welcher sich von dem einen Ende des Gummiblattes (3) bis zu einer Stelle hinter dessen mittigem Teil erstreckt, wobei nur ein zum anderen Ende benachbarter Abschnitt eine reduzierte Dicke aufweist.

9. Federschiene nach einem der Ansprüche 1 bis 7, dadurch gekennzeichnet, daß die Schiene (25, 27) an beiden Enden eine reduzierte Dicke aufweist, wobei nur der mittige Bereich eine normale Dicke aufweist.

## Revendications

1. Vertèbre (23) pour un caoutchouc de balai (3) d'un essuie-glace de pare-brise comprenant une paire de rails (25, 27) disposés longitudinalement dans des rainures latérales (29) dans le caoutchouc de balai (3), chaque rail étant un élément unitaire, caractérisée en ce que l'épaisseur de chaque rail (25, 27), mesurée dans une direction à angle droit par rapport au plan projeté du pare-brise, est variable longitudinalement, au moins sur une partie de sa largeur mesurée dans une direction généralement parallèle au plan projeté du pare-brise, pour former une ou plusieurs parties aplaties locales pour faire varier la flexibilité du rail afin de permettre au caoutchouc de balai (3) de suivre le contour du pare-brise selon sa longueur, chaque partie aplatie ayant été formée par un laminage, un pressage ou un poinçonnage localisé à partir de l'épaisseur normale de la matière du rail dont le reste est d'épaisseur normale et constante.

2. Vertèbre selon la revendication 1, caractérisée en ce que l'épaisseur du rail (25, 27) varie sur toute la largeur, la largeur du rail (25, 27) aux points (39) d'épaisseur réduite étant augmentée.

3. Vertèbre selon la revendication 1, caractérisée en ce que l'épaisseur du rail (25, 27) est réduite seulement le long de ses lisières (51).

4. Vertèbre selon l'une quelconque des revendications précédentes, caractérisée en ce que l'épaisseur des rails (25, 27) est réduite par aplatissement de parties (39) du rail.

5. Vertèbre selon la revendication 1, caractérisée en ce que la pression est appliquée dans de petites zones (51) le long de la ou des lisières du rail.

6. Vertèbre selon l'une quelconque des revendications précédentes, caractérisée en ce que l'épaisseur réduite des rails (25, 27) est prévue sous forme de courts tronçons individuels en des points spécifiques (39, 51) le long du caoutchouc de balai (3).

7. Vertèbre selon l'une quelconque des revendications 1 à 5, caractérisée en ce que l'épaisseur réduite du rail (25, 27) est ménagée de façon à englober des tronçons relativement longs du rail (25, 27).

8. Vertèbre selon la revendication 7, caractérisée en ce que le rail (25, 27) a une partie d'épaisseur normale s'étendant d'une première extrémité du caoutchouc de balai (3) jusqu'à un point situé au-delà de la partie centrale de ce dernier, seule une région contigue à la seconde extrémité étant d'épaisseur réduite.

9. Vertèbre selon l'une quelconque des revendications 1 à 7, caractérisée en ce que (25, 27) les deux extrémités du rail ont une épaisseur réduite, seule la partie centrale étant d'épaisseur normale.
